# EUROPEAN PATENT APPLICATION

(11) **EP 1 674 666 A1**
(43) Date of publication of application: **28.06.2006**
(21) Application number: 04258121.5
(22) Date of filing: 24.12.2004
(51) Int. Cl.: F01D 15/10, F02C 1/02, F02C 6/14

(54) **Power supply, electric device, and method of retrofitting an installation**

(71) Applicant: SHELL INTERNATIONALE RESEARCH MAATSCHAPPIJ B.V., 2596 HR Den Haag (NL)
(72) Inventor: Pettitt, Mark, 2288 GS Rijswijk (NL)

(57) **Abstract**

An electric power supply system (204-206) for powering an electric device at a location in a process plant without access to the electric power grid, which power supply system comprises a conduit for pressurized gas (120) extending to the location, and an electric generator (204-206) that is arranged to be driven by pressurized gas from the conduit (120), further an electric device adapted for use in a process plant at a location without access to the electric power grid, which device comprises an electric power supply, wherein the power supply includes an electric generator that is adapted to be driven by a pressurized gas; and a method of retrofitting an installation of a device at a location without access to the electric power grid, the installation comprising a conduit for supplying pressurized gas to the instrument, wherein an electric generator is provided that is arranged to be driven by pressurized gas from the conduit, and wherein the electric generator is arranged to provide electric power to the device.

## Description

### Field of the Invention

The present invention relates to an electric power supply system suitable for powering an electric device at a location without access to the electric power grid, to an electric device such as a measurement instrument arrangement, for use at such a location, and to a method of retrofitting an installation of a device such as a measurement instrument at such a location.

### Background of the Invention

In many process plants such as chemical plants, petrochemical plants, refineries and surface oil or gas processing plants, a pressurized gas, in particular pressurized air, installation is present that extends to numerous locations on the plant. One particular use of such a pressurized gas installation is in connection with measuring data in the plant, in particular for process-variable measurements from a plurality of locations throughout the plant. Often a dedicated pneumatic grid is installed for this purpose, the so-called instrument-air supply. Often, in older process plants, the measurement devices are pneumatic devices driven by compressed air from the instrument-air supply, and also the signals are transmitted pneumatically, via the instrument air supply.

A process-variable measurement instrument can include a measurement sensor and a transmitter.

The measurement sensor can be a (passive) electrical, a mechanical, a pneumatic or a chemical device, or a combination device that measures a process variable at a process-variable measurement point. Examples of process variables are pressure, temperature, level, differential pressure, flow rate, stream composition. In general, the measured process variable is displayed, recorded or used as an input for a process controller. To transmit the measured data to a location remote from the process-variable measurement point, the measurement instrument includes a transmitter. The transmitter converts the signal provided by the measurement device into a signal that can be used at the indicator location and transmits the signal to that location. Transmission in older plants is also done via pressurized gas lines, e.g. as a series of pressure pulses.

In more modern process plants, the signal from a measurement device is transmitted as an electric signal through an electric transmission line.

There is a desire to replace the old pneumatic devices at older plants with electric systems, in order to decrease operating and maintenance cost, and in order to increase reliability. However, such a replacement will require expensive installation of wiring, to be laid to each measurement instrument to provide it with electric power, since generally the measurement points are at locations without access to the electric power grid. Electric power is needed for an electrical data transmission system, or if measurement devices or components are to be installed that require electric power, and in many cases for both of these tasks.

The term electrical transmission of data as used herein is to include analogue, digital, wireless and/or electronic data transmission. Data transmission can be from the instrument to a control room or to a local controller, but also the other way around e.g. for sending commands or control instructions.

Wireless transmitters (and/or receivers) can eliminate the need for wires to transmit data electronically, however they still require wires for electric power supply. Electric power supplies based on photovoltaic modules have been found insufficient for this task, as feasible modules only provide enough power for the transmitter to transmit occasional, discrete measurements and do not provide enough power for the continuous, or near continuous, transmission of data as is required in many applications.

### Summary of the Invention

It is an object of the present invention to provide an electric power supply system suitable for powering an electric device at a location without access to the electric power grid

It is a further object to provide an electric device such as a measurement instrument arrangement, for use at such a location.

It is moreover an object of the invention to provide a method of retrofitting an installation of a device such as a measurement instrument at such a location. wireless process-variable measurement instrument with a power supply adequate for continuous wireless data transmission.

To this end there is provided an electric power supply system for powering an electric device at a location in a process plant without access to the electric power grid, which power supply system comprises a conduit for pressurized gas extending to the location, and an electric generator that is arranged to be driven by pressurized gas from the conduit.

The invention is based on the insight gained by Applicant, that an existing pressurized gas conduit, for example the instrument air supply in a process plant, can be used for driving electrical generators, so that electrical power can be supplied at any location reached by the pressurized gas conduit with minimum installation effort.

Suitably the power supply system includes a power storage device such as a rechargeable battery. This provides a buffer for peak power demand or for periods where pressurized gas supply is insufficient.

In an advantageous embodiment the electric generator forms part of the electric device. This allows easy installation of the device at a location where there is a supply of pressurized gas. The device can simply be connected to the pressurized gas conduit to be ready for operation.

The invention further provides an electric device adapted for use in a process plant at a location without access to the electric power grid, which device comprises an electric power supply, wherein the power supply includes an electric generator that is adapted to be driven by a pressurized gas.

Suitably, the electric device is connectable to a conduit for supplying pressurized gas, e.g. a suitable opening, connector or fitting is arranged.

Suitably, the electric device comprises one or more components selected from the group consisting of a measurement device, a control device, an electrical data transmitter, an electrical wireless data transmitter, a power storage device. For example, the electric device is a measurement instrument including a measurement device and a transmitter, in particular a wireless transmitter, and the electrical generator is adapted to provide electrical power to the measurement device and/or the transmitter.

The invention moreover provides a method of retrofitting an installation of a device at a location without access to the electric power grid, the installation comprising a conduit for supplying pressurized gas to the instrument, wherein an electric generator is provided that is arranged to be driven by pressurized gas from the conduit, and wherein the electric generator is arranged to provide electric power to the device. According to this aspect of the invention, it becomes feasible to retrofit an existing pneumatic installation in a process plant with electrical components, wherein it is not needed to install wires for power supply throughout the plant.

With the electric power supply available, one or more components of the device such as a transmitter and/or a measurement device can be replaced with one or more electrical components, or even the entire device (all components) can be replaced. It is also possible to add an electrical component to the device, e.g. a transducer converting measured non-electrical data into electrical signals or a receiver for receiving commands or data. It shall be clear that upon retrofitting the functionality of the device can be changed or enhanced, the device can also be (re-)installed at a somewhat different location.

Preferably the device is a measurement instrument, in particular a process-variable measurement instrument.

The device can also be a control device. Modern control devices such as controllable valves often are still driven by pressurized gas or air, but communication about the valve setting (one-way or two-way) is done electrically. So the present invention also allows to replace purely pneumatic control devices by hybrid devices with pneumatic action but electrical control possibility.

In a particularly relevant embodiment the device before retrofitting comprises a pneumatic data transmitter, and the pneumatic data transmitter is replaced by an electric data transmitter, preferably a wireless electric data transmitter.

### Brief Description of the Figures

The invention will now be discussed in more detail and with reference to the drawings, wherein
Figure 1 schematically shows a conventional installation of a process-variable measurement instrument;
Figure 2 schematically shows an installation of a process-variable measurement instrument according to an embodiment of the invention;
Figure 3 schematically shows a further embodiment of an installation according to the invention; and
Figures 4 and 5 schematically show a process plant before and after retrofitting with the present invention, respectively.

Where the same reference numerals are used in the Figures, they refer to the same or similar objects.

### Detailed Description of the Invention

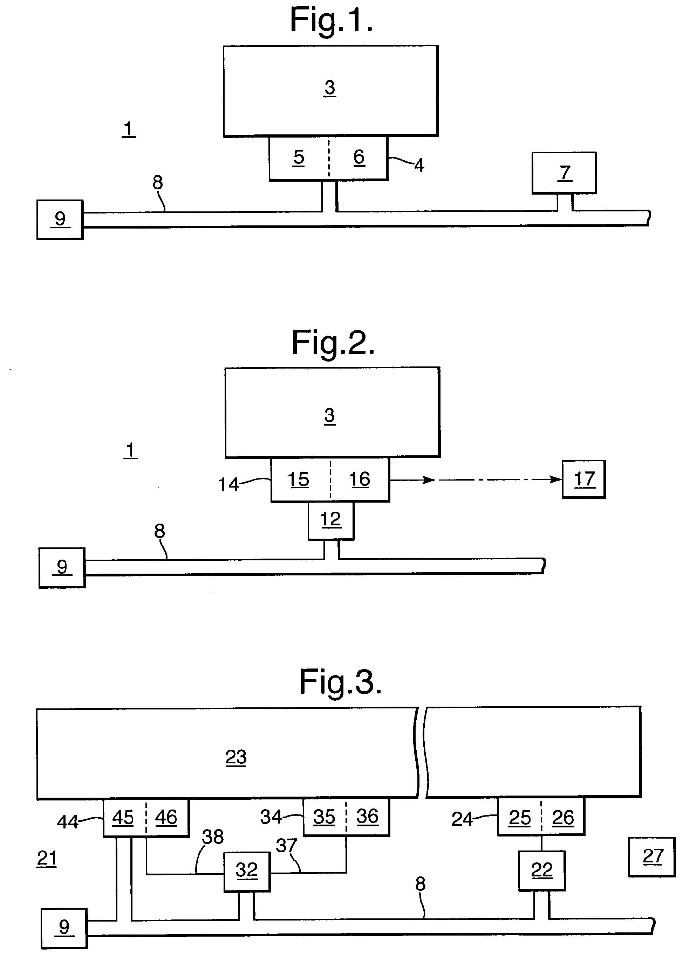

Reference is made to Figure 1, showing a schematically a process plant 1 with a process unit 3 on which a process-variable measurement instrument 4 is installed so as to monitor a process variable, e.g. a fluid level in a vessel. The instrument 4 includes a measurement device 5 for measuring the fluid level and a transmitter 6 for transmitting fluid level data to a receiver 7, e.g. to a control room where they are displayed, or to a process controller. The instrument 8 is connected to a pressurized conduit 8 which forms part of the instrument-air supply of the plant into which pressurized air is supplied by a compressor unit 9. In principle also another gas such as nitrogen can be used. Typically the pressurized gas conduit a diameter in the order of 0.5-5 cm, and the pressure is typically in the order of 2-15 bar. The pressurized gas received from the conduit 8 can be used in the operation of the level sensor 5. Also, the transmitter 6 uses pressure pulses in the conduit 8 to communicate data to the receiver 7.

Figure 2 shows the processing plant 1 after retrofitting according to the present invention.

An electric power supply system has been arranged by arranging the power supply 12 including an electric generator for generating electric power when driven by pressurized gas, at the desired location, at/near the existing pressurized gas conduit around the process unit 3. The power supply system 12 is connected to the existing instrument air-supply, conduit 8. The pneumatic measurement instrument 4 has been replaced by electrical measurement instrument 14, which includes an electrical level meter 15 and a wireless signal transmitter/receiver unit 16. The unit 16 can transmit data to the receiver 17, but can also receive control signals e.g. for switching a measurement mode.

In the embodiment shown in Figure 2 the electric power supply (electric generator) forms part of the electric device, measurement instrument 14, and has a connector to connect to the conduit 8. The electric generator can be installed in the same housing as the measurement device. However, it can also be arranged in a separate housing and electrically connected to the device by a cable.

The measurement instrument 14 is an electric device comprising an electric power supply, wherein the power supply includes an electric generator that is adapted to be driven by a pressurized gas.

Figure 3 shows another schematic embodiment of the present invention at the hand of which other variants of the invention can be explained. Process plant 21 has a process unit 23, e.g. a pipeline, which extends along a substantial distance, say 100 m or more. At a first point of the process unit a first measurement instrument 24 is installed in accordance with the invention. A power supply 22 is provided, connected to the pressurized air conduit 8. The power supply belongs to the measurement instrument 24 and is connected by wire to the instrument so as to provide it with electric power for its operation. The measurement instrument has for example a pressure sensor 25 adapted to provide electric data to a display unit 26, which optionally can (but does not have to) also include a transmitter for pressure data to receiver 27 for further use.

At a different location along the process unit 23 there is another power supply unit 32. The power supply 32 serves to provide several electric devices 34, 44, with electric power through power cords 37,38. Device 34 is a measurement instrument including for example a temperature sensor 35 and a wireless temperature data transmitter 36. The temperature sensor can be a passive device such as a thermocouple that does not need electric power for operation but provides an electric signal to the signal transmitter 36.

Device 44 is a controllable valve including a valve unit 45 and a control unit 46. The valve unit is operated by pressurized air from the conduit 8. This can have different reasons, e.g. the power required for operating the valve can be much higher than available from the power supply 32, or considerations of fail-safe operation can play a role. The control unit 36 is electrically operated and serves for valve setting upon receipt of an appropriate command or signal, and suitably the possibility of transmitting the valve setting to a receiver such as a process controller. The control unit can communicate via wires or wireless with a controller.

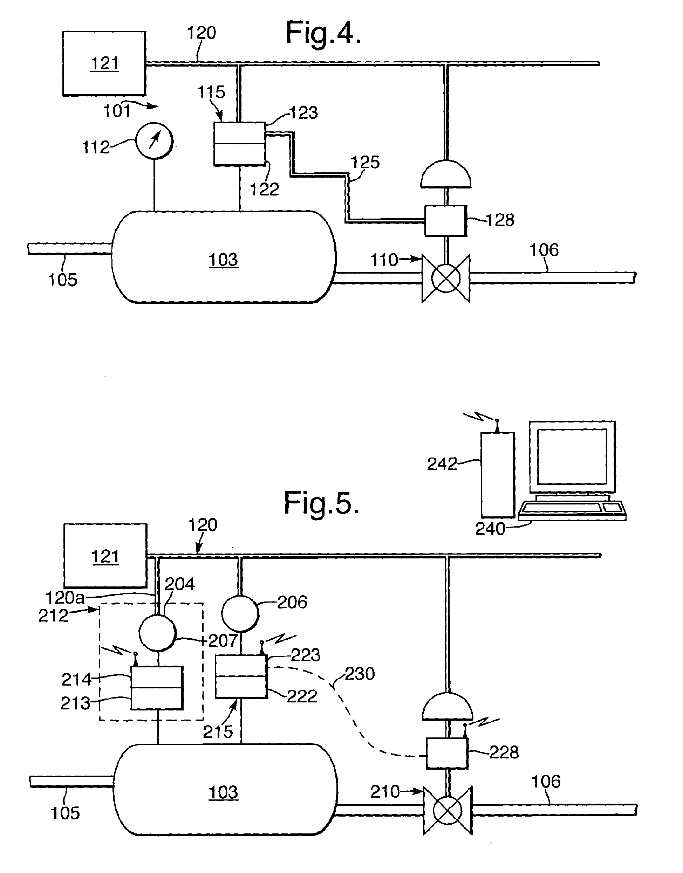

Figures 4 and 5 show another embodiment of a process plant 101 before and after retrofitting, wherein power supplies and a devices according to the invention are installed.

The process plant 101 in Figure 4, before retrofitting, comprises a tank or vessel 103 with a fluid inlet pipe 105 and a fluid outlet pipe 106. In the fluid outlet pipe 106 a controllable valve 110 is installed. Meters are installed on the vessel 103 for measuring process variables, e.g. a bimetal temperature meter 112 and a pressure meter 115. The pressure meter is connected to the instrument air supply 120 and uses pressurized air for its operation. The instrument air supply is fed by compressor 121. The pressure meter comprises the actual sensor 122 and a pneumatic transmission unit 123, connected via a pressurized air line 125 to a pneumatic positioning unit 128 of the controllable valve 110. The controllable valve 110 is also connected to the instrument air supply 120. During operation of the process plant, liquid level data are transmitted via pneumatic line 125 to the controllable valve 110, wherein the pneumatic positioner 128 uses the pressurized gas in the instrument air supply 120 for manipulation of the valve opening.

Figure 5 shows the process plant 101 after retrofitting of the control around vessel 103. The instrument air supply grid 120 is basically unchanged, only a short branch 120a was added near the vessel 103. Two power supplies with electric generator according to the invention are installed, 204, 206 at suitable locations in the air supply lines. The bimetal temperature meter 112 has been replaced by temperature meter 212 that is electrically driven, and to this end includes the electrical generator 207 and a battery (not shown) in the housing of the device that is indicated with dashed lines. The temperature meter comprises the actual pressure sensor 213 and a wireless transmitter 214. The pressure meter 115 has been replaced by the electrically driven pressure meter 215 with sensor 222 and wireless transmitter 223. Liquid level meter 215 is electrically connected to power supply system 206. Also the controllable valve 210 has been retrofitted, wherein the actual valve may perhaps be retained, as is continues to operate on the basis of pressure from the air supply, but the positioner is now electrically driven, and arranged to receive wireless electrical instructions/ signals. The valve can also include a wireless transmitter, e.g. for sending data about the valve opening to a process controller. When an electrical cable is installed as indicated at 230, power can be obtained from power supply system 206, otherwise it is also possible to install a separate power supply for the controllable valve 210. When such a cable is present, it is also possible to transmit/receive data between the controllable valve 210 and the pressure meter 215 by wire. A process controller unit 240 is arranged to transmit and receive wireless data through receiver/ transmitter 242, and can also transmit data or commands to units equipped with a receiver. If desirable, wire communication lines can be installed for part or all of the data transmission.

Retrofitting plant 101 requires mainly the exchange of hardware components, but expensive manpower cost for installing cables is not required. Moreover the functionality of the system is enhanced. Data from the temperature meter 212 can now be evaluated in the process controller, and it can be chosen whether the valve 210 is directly controlled by the pressure meter 215 or by the process controller 240, or both.

The electric generator for use with the invention can be of any type suitable for converting mechanical energy from the pressurized gas into electricity. It can include a blade assembly or it can for example be a small turbogenerator. It can be designed to provide AC or DC power, e.g. 12 or 24 V DC, or 110, 220-240 V AC. A power output of as low as 0.2-2 W can be sufficient if e.g. only power for wireless data transmission is needed, but a higher power output s also possible depending on the pressure, diameter and capacity of the pressurized gas line.

In the above description of the invention pressurized gas has been used, but it shall be clear that in principle any pressurized fluid, in particular a hydraulic liquid can be used instead of pressurized gas, when available. It is also possible to use the invention in other installations than a process plant.

## Claims

1. An electric power supply system for powering an electric device at a location in a process plant without access to the electric power grid, which power supply system comprises a conduit for pressurized gas extending to the location, and an electric generator that is arranged to be driven by pressurized gas from the conduit.

2. The electric power supply system according to claim 1, wherein the power supply system includes a power storage device.

3. The electric power supply system according to claim 1 or 2, wherein the electric generator forms part of the electric device.

4. An electric device adapted for use in a process plant at a location without access to the electric power grid, which device comprises an electric power supply, wherein the power supply includes an electric generator that is adapted to be driven by a pressurized gas.

5. The electric device according to claim 4, wherein the power supply is connectable to a conduit for supplying pressurized gas.

6. The electric device according to claim 4 or 5, wherein the electric device comprises one or more components selected from the group consisting of a measurement device, a control device, an electrical data transmitter, an electrical wireless data transmitter, a power storage device.

7. A method of retrofitting an installation of a device at a location without access to the electric power grid, the installation comprising a conduit for supplying pressurized gas to the instrument, wherein an electric generator is provided that is arranged to be driven by pressurized gas from the conduit, and
wherein the electric generator is arranged to provide electric power to the device.

8. The method according to claim 7, wherein one or more or all component(s) of the device are replaced by one or more electrical component(s); and/or wherein an electrical component is added to the device.

9. The method according to claim 7 or 8, wherein the device is a measurement instrument, in particular a process-variable measurement instrument.

10. The method according to any one of claims 7-9, wherein the device before retrofitting comprises a pneumatic data transmitter, and wherein the pneumatic data transmitter is replaced by an electric data transmitter, preferably a wireless electric data transmitter.
